# EUROPEAN PATENT APPLICATION

(11) **EP 3 896 707 A1**
(43) Date of publication of application: **20.10.2021**
(21) Application number: 20169602.8
(22) Date of filing: 15.04.2020
(51) Int. Cl.: H01F 27/38, H01F 3/10, H02M 1/12, H02M 7/42

(54) **INDUCTOR ASSEMBLY**

(71) Applicant: Siemens Aktiengesellschaft, 80333 München (DE)
(72) Inventor: Mondal, Gopal, 91058 Erlangen (DE); Robinson, Jonathan, 90489 Nürnberg (DE)

(57) **Abstract**

Inductor assembly for a single-phase or multi-phase interleaved converter having at least two interleaved arms comprising a number of first magnetic cores corresponding to the number of interleaved arms, for each of the first magnetic cores, a plurality of first coils arranged on respective legs of this first magnetic core, the first coils corresponding to the phases in the interleaved arm associated with the first magnetic core, a second core comprising one leg, the second core being magnetically coupled to the first core and a second coil for each of the interleaved arms, each second coil being electrically connected in series with each of the first coils associated with the same interleaved arm, the second coils being arranged on the one leg of the second core with identical winding direction.

## Description

The present invention relates to an inductor assembly, particularly for a single or multi-phase interleaved converter comprising a plurality of conductors forming coils that are arranged on legs of the inductor assembly. The present invention particularly relates to a high-current converter.

Many types of converters, e.g. typical DC/AC converters with half-bridges supplying a DC input voltage in a pulse width modulation to generate an AC output, produce electrical noise that is passed to a load or the grid and reduces voltage quality there which in turn may reduce performance or may even be hazardous to machinery.

In addition to the noise produced by standard, non-interleaved converters, interleaved converters produce circulating currents within the parallel phases. Inductors are necessary for both the reduction of circulating currents and common mode noise.

Inductive elements, i.e. conductors arranged typically as coils, may be used in converters for filtering the AC voltage signal. Both differential mode noise, created from circulating current and common mode noise are points of consideration when an inductor for a converter is built. While the bulk and weight of inductive and capacitive elements depends on the specific converter parameters it is typical for these elements to make up a considerable part of the overall weight and size of a converter.

The objective of the present invention is to provide an inductor assembly with a reduced size.

An inductor assembly for a single-phase or multi-phase interleaved converter in accordance with the invention comprises at least two interleaved arms and further comprises a number of first magnetic cores corresponding to the number of interleaved arms. For each of the first magnetic cores, a plurality of first coils are arranged on respective legs of this first magnetic core, the first coils corresponding to the phases in the interleaved arm associated with the first magnetic core.

The inductor assembly further comprises a second core comprising one leg, the second core being magnetically coupled to the first core with a second coil for each of the interleaved arms arranged on the one leg of the second core with identical winding directions.

Each second coil is electrically connected in series with each of the first coils associated with the same interleaved arm. The coils on the first magnetic cores are each preferably connected to an AC terminal of a respective phase and respective interleaved arm of that phase.

The first coils may be inversely coupled by being arranged in a similar manner, particularly wound in the same way, on parallel legs of the corresponding first magnetic core. When all of the first conductors are arranged in a similar manner on their respective legs of the first core each pair of the first conductors is inversely coupled. The first and second magnetic core each may comprise one or more air gaps or low permeability material separating individual parts of the cores.

Advantageously the inductor assembly provided by the invention is a combined inductor for both the circulating currents of the phase-internal coils and for the common mode noise reduction of the grid-side converter coils which is smaller than conventional individual inductors for both tasks are. The inductor assembly is small as in the inductor assembly of the invention there is no fundamental flux in the magnetic path. It is also smaller than the combined size of conventional inductor systems because the magnetic path used in the combined inductor assembly of the invention increases the inductance of the present coils, which in turn can then be arranged using a smaller number of windings maintaining a predetermined inductance necessary for the converter. The inductor assembly of the invention also allows efficient cooling.

Further features that may be added alone or together in exemplary embodiments of the invention include:
Preferably, the first and second magnetic cores are magnetically coupled across an air-gap or low permeability material.

The second magnetic core may be arranged to have exactly a single leg. In other words the second magnetic core may only feature a single beam-like structure carrying any coils while not providing a closed magnetic path itself. The yokes forming the end of the second magnetic core are advantageously formed to allow magnetically coupling the second magnetic core to the first cores and thus may feature protrusions in the form of short arms.

The first magnetic cores may each have a first upper yoke member interconnecting the upper ends of the legs and a first lower yoke member interconnecting the lower ends of the legs. The second magnetic core may have a second upper and lower yoke member. The first and second upper and lower yoke members may then be arranged form a magnetic circuit by placing the first and second magnetic cores in close proximity to achieve magnetic coupling and form magnetic closed circuits incorporating air gaps.

The plane of a first of the first magnetic cores that is formed by the directions of extent of its legs and its yokes and the plane of a second of the first magnetic cores may intersect at an angle. They may in particular be perpendicular.

The distances between the leg of the second magnetic core and the closest leg of each of the first magnetic cores may be identical. In other words the inductor assembly may be arranged in a way that is symmetrical with respect to the arrangement of each of the first magnetic cores to the second magnetic core. In this case, at least some of the first cores may extend from the second core in different, non-parallel directions.

In an alternative embodiment, the planes of the first magnetic cores formed by the directions of extent of its respective legs and yokes may be parallel to each other. The first magnetic cores are in other words arranged next to each other in a parallel manner. In this embodiment the second magnetic core is not arranged in a symmetrical way with respect to the first cores. Instead, it will be closer to one or more of the first cores than to some other of the first cores. This provides a very compact setup.

The yoke members of a first magnetic core may extend in a direction perpendicular to the extent of the legs of the first magnetic core. The first core may then be EE shaped. In other words, the first core may comprise two parts separated by an air gap or low permeability material where both parts are shaped identically in the form of the capital letter E having a backside bar or yoke member with equally spaced arms extending from the backside bar and wherein the parts are oriented to make the arms of the two E shapes point towards each other. The EE shape suggests exactly three arms and thus exactly three phases but the shape may have fewer or more than three arms and thus have room for more than three phases. Each pair of arms forms one leg of the first core.

The number of interleaved arms may be at least three.

The corresponding first and second windings may be positively coupled. In this setup a common mode magnetic flux may or must return through the leg that holds the second conductors.

The number of turns of the conductors on the second core may be lower than the number of turns of the associated first conductors.

The second magnetic core may be LL-shaped in multiple planes. Then the first magnetic cores are arranged adjacent to the arms of the LL shape, each of the first magnetic cores using a different set of those arms.

Typically the first core will have a leg for each of the phases and the first conductors each correspond to one of the phases.

The first magnetic core may comprise a first core material and the second core may comprise a second core material different from the first core material. For example, the first magnetic core may be made from a low loss material, particularly ferrite or an amorphous core material while the second core may be made from a high flux density material such das Si-Fe or a powdered core material. Advantageously a high flux density material allows the second core be smaller reducing winding losses and enhancing overall efficiency.

The inductor assembly may be used to form a multi-phase interleaved converter with advantageously reduced component size.

Embodiments of the present invention are now described with reference to the accompanying drawings to which the invention is not limited.
Fig. 1 shows a three-phase interleaved converter using three interleaved arms.
Fig. 2 shows a first inductor assembly.
Figs. 3 and 4 show simulated results for flux densities and currents occurring in the interleaved converter with and without the first inductor assembly.
Fig. 5 shows a second inductor assembly.

The illustrations of the drawings are in schematic form. It is noted that in different figures, similar or identical elements use the same reference signs.

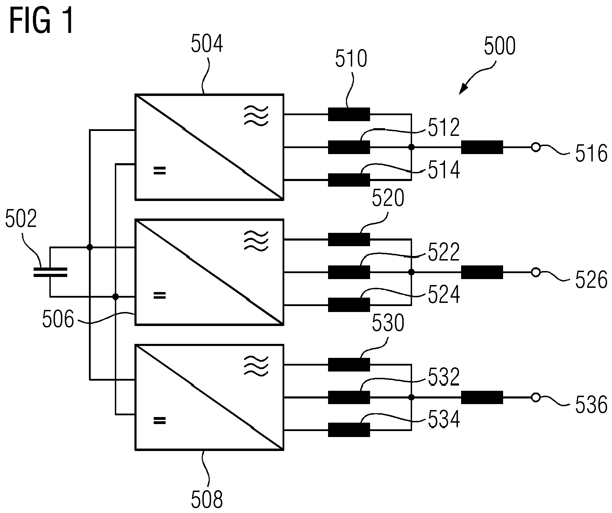

Advantageous embodiments of the invention can be employed in single-phase or multi-phase interleaved converters such as the simplified converter of Fig. 1. Fig. 1 shows a three phase interleaved DC/AC converter 500 with three parallel modules, herein also called arms, per phase.

In a first phase, a three-module inverter 504 is connected to a DC supply 502 at its input terminals. The three output terminals are connected each to one inductivity 510, 512, 514 the far sides of which are joined and connected to an AC terminal 516 for the first phase. In a similar manner, for a second phase a three-module inverter 506 is connected to the DC supply 502 at its input terminals. The three output terminals are connected each to one inductivity 520, 522, 524, the far sides of which are joined and connected to an AC terminal 526 for the second phase. For a third phase a three-module inverter 508 is connected to the DC supply 502 at its input terminals and the three output terminals are connected each to one inductivity 530, 532, 534, the far sides of which are joined and connected to an AC terminal 536 for the third phase.

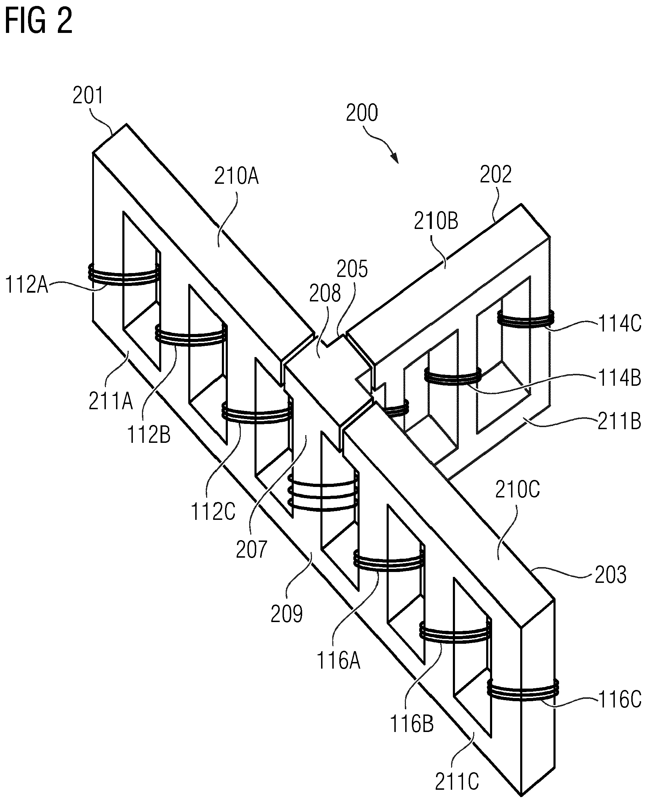

An inductor assembly 200 according to an embodiment of the invention which is shown in Fig. 2 is an advantageous setup to use in interleaved converter 500. Inductor assembly 200 can be used for any or all of the phases of interleaved converter 500.

Inductor assembly 200 comprises a second core 205. The second core 205 of inductor assembly 200 is mainly formed by a single leg 207 having two parts separated by an air gap or low permeability material. The upper and lower ends of the leg 207 are connected to yoke members 208, 209 which comprise short bars extending vertically from the leg 207 in three different directions, each direction corresponding to one of the interleaved modules of the converter 500. The direction that the leg 207 of the second core 205 extends in will be called the y-direction. The directions that the short bars of yoke members 208, 209 extend in will be called the x-direction and the z-direction. One of the short bars extends in the z-direction, while the other two short bars extend in the x-direction, one to each side of yoke members 208, 209.

The inductor assembly 200 comprises second conductors 122, 124, 126 that are arranged as coils on the single leg 207 of the second core 205. The second conductors 122, 124, 126 are all arranged in a stacked manner and with identical winding directions. Each of the second conductors 122, 124, 126 is associated with one of the phases of interleaved converter 500.

Inductor assembly 200 further comprises three first cores 201...203. The first cores 201...203 are EE shaped three leg cores. As is well known a EE shaped core comprises two parts separated by an air gap or low permeability material where both parts are shaped identically in the form of a the capital letter E having a backside bar or yoke member 210A...C, 211A...C with equally spaced arms extending from the backside bar and wherein the parts are oriented to make the arms of the two E shapes point towards each other. The direction that the legs of the first cores 201...203 extend is also the y-direction.

Each of the three-legged first cores 201...203 is associated with one of the phases of converter 500. Each of the first cores 201...203 thus comprises three first conductors 112A...C, 114A...C, 116A...C, wherein the three first conductors 112A...C, 114A...C, 116A...C of a first of the first cores 201...203 are associated with the three interleaved modules of a first of the phase. The first conductors 112A...C, 114A...C, 116A...C are each arranged on its own leg of the respective first core 201...203. The first conductors 112A...C, 114A...C, 116A...C are all wound in the same orientation and thus inversely coupled. For the first phase, the first conductors 112A, 114A, 116A arranged on a first of the first cores 201...203 represent the inductivities 510, 512, 514 of the three modules of the first phase.

Each of the yoke members 210A...C, 211A...C of the first cores 201...203 has a short arm protruding from one of their respective ends in a way similar to the second core yoke members 208, 209. Each of the first cores 201...203 is arranged with the short arms of the respective yoke member 210A...C, 211A...C pointed towards a pair of short arms of the yoke members 208, 209 of the second core 205, thus forming a magnetic circuit with the second core 205. The cores 205, 201...203 remain separated by an air-gap or low permeability material.

As the short arms of the yoke members 208, 209 of the second core 205 extend in the z-direction and the x-direction, the yoke members 210A...C, 211A...C of the first cores 201...203 also extend in the z-direction for one of the first cores 201...203 and the x-direction for the other two. Thus the complete inductor assembly 200 has a three-dimensional T shape with the second core 205 at the center and the first cores 201...203 forming three equally long arms.

Each of the second conductors 122, 124, 126 is associated with one of the phases and is therefore electrically connected in series with the three first conductors 112A...C, 114A...C, 116A...C corresponding to the same phase. Those three first conductors 112A...C, 114A...C, 116A...C are arranged on a single one of the first cores 201...203. The winding direction of the second conductors 122, 124, 126 is the opposite of the winding direction of the first conductors 112A...C, 114A...C, 116A...C.

The second conductors 122, 124, 126 are thus positively coupled to the first conductors 112A...C, 114A...C, 116A...C as well as among themselves.

In this way a combined inductor assembly is provided. The first conductors 112A...C, 114A...C, 116A...C produce identical fundamental voltages and high frequency circulating currents. The circulating currents are phase shifted by 120° corresponding to three interleaved modules between the first conductors 112A...C, 114A...C, 116A...C. The first magnetic cores 201...203 together with the first conductors 112A...C, 114A...C, 116A...C retain the ability to reduce these circulating currents occurring in each phase between the interleaved modules. When this differential mode current is symmetric, there will be no differential mode flux in leg 207 of the second core 205 because the differential mode fluxes are mutually phase shifted by 120 degrees and the sum of these three fluxes is zero.

The combination of first and second magnetic cores 201...203, 205 creates a path for common mode magnetic flux occurring in the second conductors 122, 124, 126. This increases the common mode inductance of the inductor assembly over that of a separate closed second core. This in turn means that the number of windings can be reduced for the common mode filter while maintaining the same inductance. Reducing the number of windings of the second conductors 122, 124, 126 reduces the overall volume and cost of the inductor assembly 200. The length of the air gap between the first cores 201...203 and the second core 205 can be adjusted to avoid core saturation due to fundamental flux. In addition the common mode inductor that is built in this way requires a smaller volume as a return path for common mode flux is provided by the first cores 201...203, i.e. by the differential mode inductors.

Apart from an advantageous size reduction of the magnetic components a better leakage behavior is also achieved with inductor assembly 200 as well as reduced busbar lengths.

Cooling of the inductor assembly 200 is also simple as the phases are not very close together.

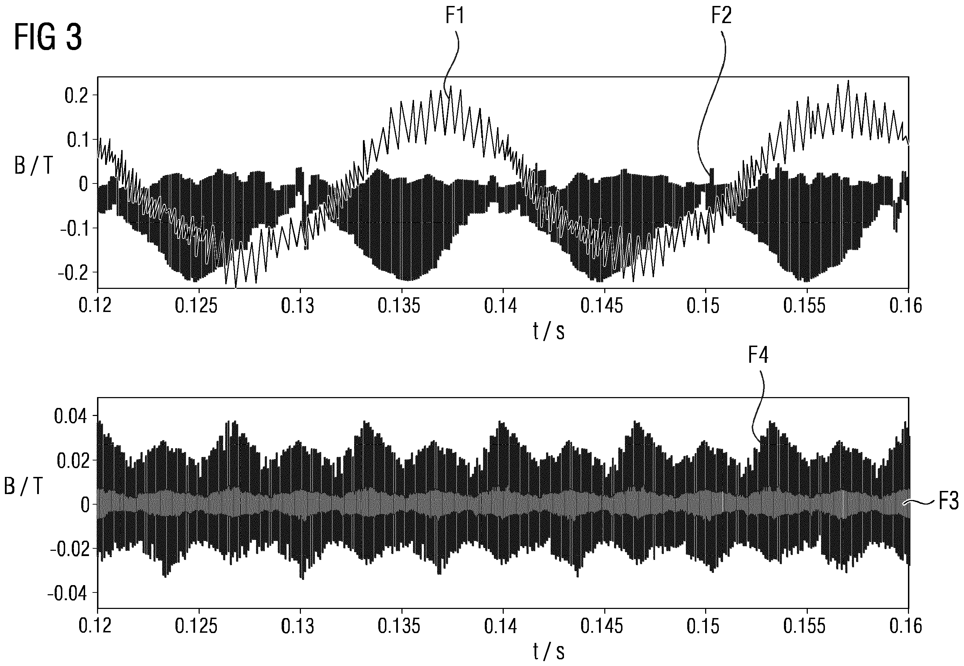

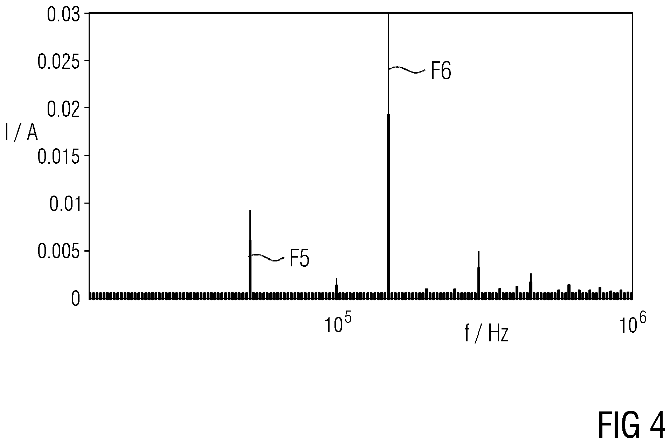

Results of a simulation model using the Simulink magnetic toolbox are shown in figs. 3 and 4. Both figures compare the performance of two inductors that are separated as in the prior art with the performance of inductor assembly 200. The noise source is simulated by three parallel interleaved converters. The switching frequency of an individual module is 50 kHz. The upper panel of fig. 3 shows a flux density F1 with the inductor assembly 200 and a flux density F2 without inductor assembly 200, i.e. with separate inductors of the prior art, both at the module inductor section. The lower panel of fig. 3 shows a flux density F3 with the inductor assembly 200 and a flux density F4 without inductor assembly 200, both at the common mode inductor section. Both panels show time domain plots of the simulated results. The simulation model is set such a way that the flux density is identical in both combined and non-combined cases by adjusting the number of turns. Fig. 4 shows the simulation result F5 of a combined inductor assembly 200 and the simulation result F6 for non-combined inductors in terms of CM noise current at the output of both the inductors in the frequency domain. The 150 kHz current results from interleaving.

It must be noted that the flux through the inductor has sinusoidal shape due to influence of the fundamental component in the case of inductor assembly 200. This increases the flux through the magnetic cores 201...203, 205, resulting in higher area requirement. By adjusting the air gap a low flux through the cores can be maintained.

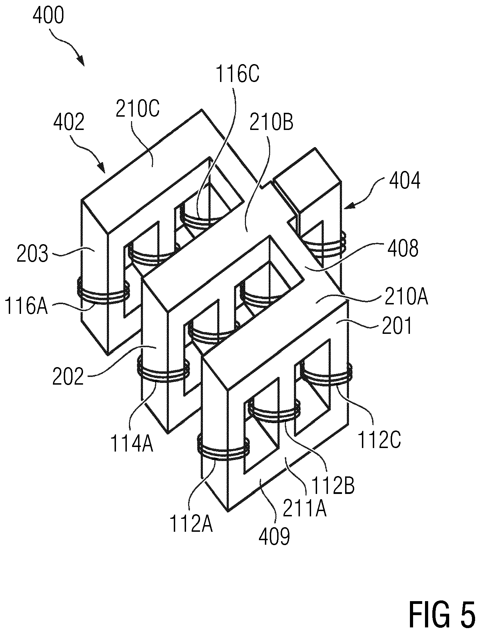

Fig. 5 shows a second embodiment of the invention. Inductor assembly 400 comprises a first core system 402 arranged in a different form and combined to form a single core system. Inductor assembly 400 also comprises a second core 404 encompassing most of the elements of the second core 205 of fig. 2.

The first core system 402 of inductor assembly 400 comprises three first cores which correspond to first cores 201...203 in that the they are EE shaped three leg cores where each of these parts corresponds to one phase of converter 500. While the individual legs of these first cores 201...203 extend in the y-direction, the cores 201...203 themselves are oriented in the z-direction. The first cores 201...203 of the first core system 402 thus extend mostly in the y-z-plane. The three first cores 201...203 are arranged parallel to each other, offset from each other in the x-direction. The first conductors 112A...C, 114A...C, 116A...C are arranged on the first core system 402 in a manner that is similar to inductor assembly 200 and therefore is not repeated.

All first cores 201...203 of the first core system 402 share a single upper yoke member 408 and a single lower yoke member 409, both of which extend mainly in the x-z-plane and are arranged to mechanically connect all legs of the first core system 402. For this the yoke members 408, 409 are themselves E-shaped with the backbar of the capital letter E shape connecting the first cores 201...203 and the horizontal bars of the E shape acting as the yoke members 210A...C, 211A...C.

Opposite the middle horizontal E shape bar, i.e. opposite the middle one of the parallel parts of the first core system 402 the yoke members comprise short arms extending in the z-direction.

The second core 404 of inductor assembly 400 is LL-shaped, i.e. it comprises a single leg carrying the three second conductors in the same way as in inductor assembly 200. The yoke members 410, 411 of the second core comprise short arms extending in a single direction, in this example the negative z-direction. The respective short arms of the first and second cores 402, 404 are arranged facing each other, thus magnetically coupling the first and second cores 402, 404. All winding directions and conductor connections in inductor assembly 400 are identical to those of inductor assembly 200.

While the embodiments all featured three-legged first cores suitable for a three phase converter setup, their concept can be generalized for any number of parallel modules or phases. The number of legs and the number of first conductors 112A...C, 114A...C, 116A...C in the differential mode inductor, i.e. the first core 201...203, 402, is equal to the number of parallel interleaved modules. The number of second conductors is also equal to the number of interleaved modules.

Advantageously the inductor assemblies 200, 400 provide a differential mode and a common mode inductor in a single compact setup. This leads to increased values of the inductance that can in turn be used to reduce the number of windings of the first conductors 112A...C, 114A...C, 116A...C. Reducing the number of windings leads to a reduced flux in the magnetic path which allows reducing the volume and thus weight and cost of the inductor assembly.

A further advantage arises from the cores 201...203, 205, 402, 404 being arranged in a combined setup of this invention instead of being just arranged in proximity. The combined setup of the cores will remove the possibility of core saturation from stray flux that the cores 201...203, 205, 402, 404 induce in each other.

### List of Reference Numbers

- 112A...C, 114A...C, 116A...C: first conductor
- 122, 124, 126: second conductor
- 200, 400: inductor assembly
- 201...203: first magnetic core
- 205: second magnetic core
- 207: leg
- 208, 209: yoke member
- 210A...C, 211A...C: yoke member
- 500: interleaved DC/AC converter
- 502: DC supply
- 504, 506, 508: three-module inverter
- 510, 512, 514: inductivity
- 520, 522, 524: inductivity
- 530, 532, 534: inductivity
- 516: AC terminal
- F1...4: flux density
- F5, F6: current
- 402: first core system
- 408, 409: yoke member

## Claims

1. Inductor assembly (200, 400) for a single-phase or multi-phase interleaved converter (500) having at least two interleaved arms comprising:
- a number of first magnetic cores (201...203) corresponding to the number of interleaved arms,
- for each of the first magnetic cores (201...203), a plurality of first coils (112A...C, 114A...C, 116A...C) arranged on respective legs of this first magnetic core (201...203), the first coils (112A...C, 114A...C, 116A...C) corresponding to the phases in the interleaved arm associated with the first magnetic core (201...203),
- a second core (205, 404) comprising one leg (207), the second core (205, 404) being magnetically coupled to the first core (201...203),
- a second coil (122, 124, 126) for each of the interleaved arms, each second coil (122, 124, 126) being electrically connected in series with each of the first coils (112A...C, 114A...C, 116A...C) associated with the same interleaved arm, the second coils (122, 124, 126) being arranged on the one leg (207) of the second core (205, 404) with identical winding direction.

2. The inductor assembly (200, 400) of claim 1, wherein pairs of the first coils (112A...C, 114A...C, 116A...C) are inversely coupled.

3. The inductor assembly (200, 400) of one of the preceding claims, wherein the first and corresponding second coils (112A...C, 114A...C, 116A...C, 122, 124, 126) are positively coupled.

4. The inductor assembly (200, 400) of one of the preceding claims, wherein the second magnetic core (205, 404) has exactly a single leg (206).

5. The inductor assembly (200, 400) of one of the preceding claims, wherein
- the first magnetic cores (201...203) have a first upper yoke member (210A...C, 408) interconnecting the upper ends of the legs and a first lower yoke member (211A...C, 409) interconnecting the lower ends of the legs,
- the second magnetic core (205, 404) has a second upper and lower yoke member (208, 209, 410, 411),
- the first and second upper and lower yoke members (208, 209, 210A...C, 211A...C, 408...411) form a magnetic circuit.

6. The inductor assembly (200, 400) of claim 5, wherein the yoke members (210A...C, 211A...C, 408, 409) of a first magnetic core (201...203) extend in a direction perpendicular to the extent of the legs of the first magnetic core (201...203).

7. The inductor assembly (200, 400) of claim 6, wherein the plane of a first of the first magnetic cores (201...203) that is formed by the directions of extent of its legs and its yoke members (210A...C, 211A...C, 408, 409) and the plane of a second of the first magnetic cores (201...203) intersect at an angle, in particular are perpendicular.

8. The inductor assembly (200, 400) of one of the preceding claims, wherein the distances between the leg (207) of the second magnetic core (205, 404) and the closest leg of each of the first magnetic cores (201...203) are identical.

9. The inductor assembly (200, 400) of one of the claims 1 to 7, wherein the planes of the first magnetic cores (201...203) formed by the directions of extent of its respective legs and yokes (210A...C, 211A...C, 408, 409) are parallel to each other.

10. The inductor assembly (200, 400) of one of the preceding claims, wherein the first magnetic core (201...203) comprises a first core material and wherein the second core (205, 404) comprises a second core material different from the first core material.

11. Multi-phase interleaved converter with an inductor assembly (200, 400) according to one of the preceding claims.
